Europäisches Patentamt

European Patent Office

Office européen des brevets

(19)

(11) Veröffentlichungsnummer: **0 321 757 B1**

(12) **EUROPÄISCHE PATENTSCHRIFT**

(45) Veröffentlichungstag der Patentschrift:
27.02.91 Patentblatt 91/09

(51) Int. Cl.⁵ : **F16D 23/14**

(21) Anmeldenummer: 88120103.2

(22) Anmeldetag: 02.12.88

(54) Innenlaufring eines Kupplungsausrücklagers.

(30) Priorität: 23.12.87 DE 3743853

(43) Veröffentlichungstag der Anmeldung:
28.06.89 Patentblatt 89/26

(45) Bekanntmachung des Hinweises auf die
Patenterteilung:
27.02.91 Patentblatt 91/09

(84) Benannte Vertragsstaaten:
DE ES FR GB IT

(56) Entgegenhaltungen:
FR-A- 2 109 947
FR-A- 2 131 185
FR-A- 2 159 074
FR-A- 2 272 293
US-A- 4 555 007

(73) Patentinhaber: INA Wälzlager Schaeffler KG
Industriestrasse 1-3 Postfach 1220
D-8522 Herzogenaurach (DE)

(72) Erfinder: Parzefall, Walter
Kettelerstrasse 1
D-8521 Bubenreuth (DE)

(74) Vertreter: Klug, Horst, Dipl.-Ing. (FH)
c/o INA Wälzlager Schaeffler KG Postfach 12 20
D-8522 Herzogenaurach (DE)

**Beschreibung**

Die Erfindung betrifft einen Innenlaufring eines Kupplungsausrücklagers für eine mit Tellerfedern ausgerüstete Kraftfahrzeugkupplung, wobei das Kupplungsausrücklager aus einem auf einer Schiebehülse angeordneten Wälzlager mit zwei konzentrischen Laufringen besteht, zwischen denen Wälzkörper abrollen, wobei der Innenlaufring aus einem metallischen Laufbahnteil und einem Ringteil gebildet ist, das an seiner der Kupplung zugewandten Stirnseite eine kreisringförmige Anlaufscheibe aufweist, die im Betrieb mit den Federzungenenden der Tellerfeder zusammenwirkt, und wobei das Ringteil einen axialen Fortsatz aufweist, der spielfrei in die Bohrung des metallischen Laufbahnteils eingesetzt ist und der an seinem der Anlaufscheibe entgegengesetzten Ende derart hinter das Ende des metallischen Laufbahnteils greift, daß das Laufbahnteil formschlüssig am Ringteil gehalten ist.

Ein Innenlaufring für ein Kupplungsausrücklager der gennanten Art ist bereits aus den Dokumenten FR-A-2 131 185 und DD-A-90 463 bekannt. Das Kupplungausrücklager besteht aus einem Kugellager mit massiven Laufringen und einer separaten Anlaufscheibe, die mit Hilfe einer besonderen Tragscheibe mit dem Innen- oder Außenring verbunden ist. Die Tragscheibe weist ein angebogenes, axial weit aus dem Wälzlager herausragendes Profil auf. Das beschriebene Lager ist schon durch die Massivausführung teuer und bedingt durch die separaten Teile einen zusätzlichen Montageaufwand. Ein weiterer Nachteil ist darin zu sehen, daß die gezeigte Ausbildung axial einen sehr großen Bauraum beansprucht, der nicht in allen Fällen zur Verfügung steht.

Der Erfindung liegt die Aufgabe zugrunde, ein leicht montierbares Lager der genannten Art in besonders kostengünstiger Weise aus weniger Einzelteilen zu fertigen, wobei zusätzlich die axiale Bauraumlänge stark reduziert wird.

Erfindungsgemäß wird diese Aufgabe dadurch gelöst, daß das Ringteil in einem Stück die kreisringförmige Anlaufscheibe und den axialen Fortsatz daß sich die Anlaufscheibe bildet, mit ihrer von der Kupplung abgewandten Seite unmittelbar am metallischen Laufbahnteil abstützt, und daß das den Laufbahnteil hintergreifende Ende des axialen Fortsatzes durch eine Anzahl von Schlitzen in federnde Lappen unterteilt ist. Durch die erfindungsgemäße Ausbildung ergibt sich der Vorteil, daß die Herstellungsund Montagekosten durch die Verringerung der Einzelteile beträchtlich gesenkt werden. Dadurch, daß das Ringteil nur in die Bohrung des metallischen Laufbahnteils eingesteckt zu werden braucht, wobei der Laufbahnteil an den federnden Lappen des Ringteilendes einschnappt, wird die Montage des Ringteils an dem Laufbahnteil vereinfacht. Die einstückige Ausführung des Ringteils ermöglicht außerdem eine Verringerung der axialen Baulänge des Lagers.

Nach einer bevorzugten Ausführungsform der Erfindung ist die Ausbildung so getroffen, daß die Anlaufscheibe aus einem polymeren Werkstoff gebildet ist. Dadurch ergibt sich der besondere Vorteil, daß sowohl das metallische Laufbahnteil als auch das polymere Ringteil besonders einfach herstellbare Bauteile sind, die in einfacher Weise dauerhaft und spielfrei durch eine Schnappverbindung miteinander verbunden werden.

Dabei kann der polymere Werkstoff vorzugsweise im Bereich der kreisringförmigen Anlaufscheibe mit verschleißmindernden Werkstoffen, wie Glasfasern oder insbesondere Keramikteilchen versehen sein. Es besteht jedoch auch die Möglichkeit, das gesamte Ringteil aus einem keramischen Werkstoff zu fertigen und in geeigneter Weise mit dem metallischen Laufbahnteil zu verbinden.

Nach einem anderen Merkmal der Erfindung ist vorgesehen, daß zwischen der kreisringförmigen Anlaufscheibe und dem axialen Fortsatz mehrere über den Umfang verteilte Versteifungsrippen angeordnet sind. Dadurch wird erreicht, daß die Anlaufscheibe in axialer Richtung starr ausgebildet ist und so die auftretenden Belastungen im Betrieb ohne Verformung aufnehmen kann.

Eine weitere Variante der Erfindung sieht vor, daß die Versteifungsrippen in der Art von Lüfterflügeln gekrümmt ausgebildet sind. Hierzu wird in Weiterbildung der Erfindung vorgeschlagen, daß an dem der Kupplung abgewandten Ende des Innenlaufringes die Schiebehülse Öffnungen oder Bohrungen aufweist. Dadurch ergibt sich der Vorteil, daß die Lüfterflügel über die Öffnungen oder Bohrungen in der Schiebehülse Luft ansaugen und somit einen Luftstrom erzeugen, der einerseits zur Lagerkühlung dient und andererseits Schmutzpartikel, die durch Abrieb oder dergleichen entstehen können, vom Lager fernhält. Dadurch wird eine Verunreinigung des Schmierfettes verhindert und die Lagerstandzeit verlängert.

In Weiterbildung der Erfindung ist vorgesehen, daß die Anlaufscheibe an ihrer der Tellerfeder zugewandten Stirnfläche wenigstens eine radial verlaufende Rippe aufweist, die formschlüssig zwischen zwei benachbarte Federzungenenden der Tellerfeder eingreift. Durch diese Maßnahme wird eine Relativbewegung zwischen dem inneren Laufring und den Federzungenenden vermieden und dadurch übermäßiger Verschleiß verhindert.

Ausführungsbeispiele der Erfindung sind in der Zeichnung dargestellt und werden nachfolgend näher beschrieben. Es zeigen :

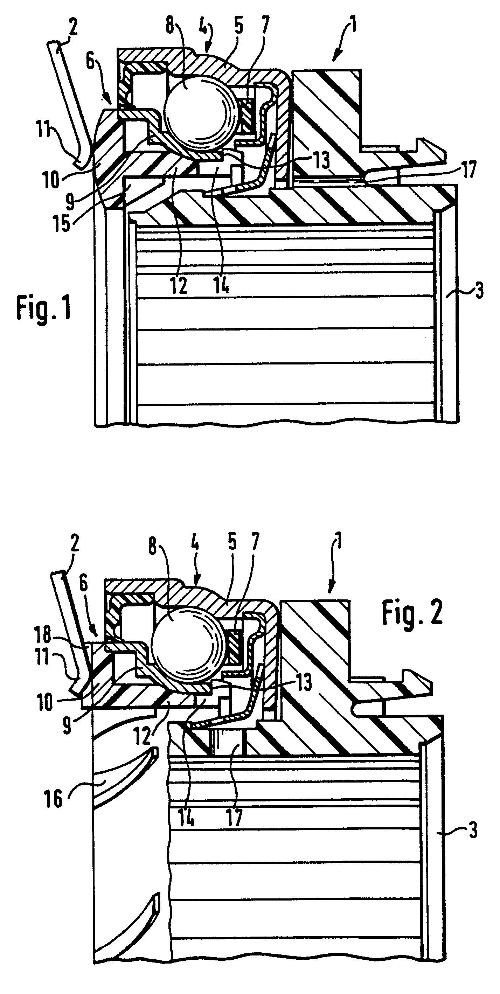

Fig. 1 und 2 einen teilweisen Längsschnitt durch ein Kupplungsausrücklager mit einem erfindungsgemäßes Innenlaufring.

Das Kupplungsausrücklager 1 einer mit Tellerfedern 2 ausgerüsteten nicht dargestellten Kraftfahrzeugkupplung besteht aus einem auf einer Schiebehülse 3 angeordneten Wälzlager 4. Dieses weist einen feststehenden Außenring 5 und einen rotierenden Innenlaufring 6 auf, zwischen denen in einem Käfig 7 auf Abstand gehaltene Kugeln 8 abrollen.

Dabei besteht der Innenlaufring 6 aus einem metallischen Laufbahnteil 9 und einem Ringteil aus polymerem Werkstoff, wobei das Ringteil die kreisringförmige Anlaufscheibe 10 für die Federzungenenden 11 der Tellerfeder 2 bildet und sich mit ihrer der Kupplung abgewandten Seite am Laufbahnteil 9 abstützt.

Außerdem weist die Anlaufscheibe 10 einen axialen Fortsatz 12 auf, der spielfrei in die Bohrung des metallischen Laufbahnteils 9 eingesetzt ist und der an seinem der Anlaufscheibe 10 entgegengesetzten Ende 13 derart hinter das Ende des metallischen Laufbahnteils 9 greift, daß das Laufbahnteil 9 formschlüssig am Ringteil gehalten ist. Dabei ist das den metallischen Laufbahnteil 9 hintergreifende Ende 13 des axialen Fortsatzes durch eine Anzahl von Schlitzen 14 in federnde Lappen unterteilt.

Gemäß dem Ausführungsbeispiel nach Figur 1 sind zwischen der kreisringförmigen Anlaufscheibe 10 und dem axialen Fortsatz 12 mehrere über den Umfang verteilte Versteifungsrippen 15 angeordnet.

Im Gegensatz dazu zeigt Figur 2 Versteifungsrippen 16, die in der Art von Lüfterflügeln gekrümmt ausgebildet sind.

Gemäß den Figuren 1 und 2 weist die Schiebehülse 3 an dem der Kupplung abgewandten Ende des Innenlaufringes 6 Bohrungen 17 auf, durch die mittels entsprechend ausgebildeter Versteifungsrippen 15 bzw. der Lüfterflügel Luft angesaugt und somit ein Luftstrom erzeugt wird, der einerseits zur Lagerkühlung dient und andererseits Schmutzpartikel vom Lager fernhält.

Die Anlaufscheibe 10 weist an ihrer der Tellerfeder 2 zugewandten Stirnfläche wenigstens eine radial verlaufende Rippe 18 auf, die formschlüssig zwischen zwei benachbarte Federzungenenden 11 der Tellerfeder 2 eingreift.

## Ansprüche

1. Innenlaufring (6) eines Kupplungsausrücklagers (1) für eine mit Tellerfedern (2) ausgerüstete Kraftfahrzeugkupplung, wobei das Kupplungsausrücklager (1) aus einem auf einer Schiebehülse (3) angeordneten Wälzlager (4) mit zwei konzentrischen Laufringen (5, 6) besteht, zwischen denen Wälzkörper (8) abrollen, wobei der Innenlaufring (6) aus einem metallischen Laufbahnteil (9) und einem Ringteil (10, 12, 13) gebildet ist, das an seiner der Kupplung zugewandten Stirnseite eine kreisringförmige Anlaufscheibe (10) aufweist, die im Betrieb mit den Federzungen (11) der Tellerfeder (2) zusammenwirkt, und wobei das Ringteil (10, 12, 13) einen axialen Fortsatz (12) aufweist, der spielfrei in die Bohrung des metallischen Laufbahnteils (9) eingesetzt ist und der an seinem der Anlaufscheibe (10) entgegengesetzten Ende (13) derart hinter das Ende des metallischen Laufbahnteils (9) greift, daß das Laufbahnteil (9) formschlüssig am Ringteil gehalten ist, **dadurch gekennzeichnet,** daß das Ringteil (10, 12, 13) in einem Stück die kreisringförmige Anlaufscheibe (10) und den axialen Fortsatz (12) bildet, daß sich die Anlaufscheibe (10) mit ihrer von der Kupplung abgewandten Seite unmittelbar am metallischen Laufbahnteil (9) abstüzt, und daß das den Laufbahnteil (9) hintergreifende Ende (13) des axialen Fortsatzes (12) durch eine Anzahl von Schlitzen (14) in federnde Lappen unterteilt ist.

2. Innenlaufring nach Anspruch 1, **dadurch gekennzeichnet,** daß das Ringteil (10, 12, 13) aus polymerem Werkstoff gebildet ist.

3. Innenlaufring nach Anspruch 1 oder 2, **dadurch gekennzeichnet,** daß zwischen der kreisringförmigen Anlaufscheibe (10) und dem axialen Fortsatz (12) mehrere über den Umfang verteilte Versteifungsrippen (15) angeordnet sind.

4. Innenlaufring nach Anspruch 3, **dadurch gekennzeichnet,** daß die Versteifungsrippen (16) in der Art von Lüfterflügeln gekrümmt ausgebildet sind.

5. Innenlaufring nach einem der vorhergehenden Ansprüche **dadurch gekennzeichnet,** daß an seinem der Kupplung abgewandten Ende die Schiebehülse (3) Öffnungen oder Bohrungen (17) aufweist

6. Innenlaufring nach einem der vorhergehenden Ansprüche, **dadurch gekennzeichnet,** daß die Anlaufscheibe (10) an ihrer der Tellerfeder (2) zugewandten Stirnfläche wenigstens eine radial verlaufende Rippe (18) aufweist, die formschlüssig zwischen zwei benachbarte Federzungenenden (11) der Tellerfeder (2) eingreift.

## Claims

1. Inner race ring (6) of a clutch release bearing (1) for a motor vehicle clutch equipped with disk springs (2), which clutch release bearing (1) consists of a rolling bearing (4), arranged on a sliding sleeve (3), with two concentric race rings (5, 6) between which rolling elements (8) roll, the inner race ring (6) being constituted by a metallic raceway part (9) and an annular part (10, 12, 13), which, at its front end facing the clutch, is provided with a circular ring-shaped stop disk (10) which, in operation, cooperates with the tongues (11) of the disk spring (2) and which annular part (10, 12, 13) has an axial extension (12), which is inserted without play into the bore of the metallic raceway part (9) and which, at its end (13) opposite the stop disk (10), engages behind the end of the metallic raceway part (9) in such a way that the raceway part (9) is retained locked on the annular part, characterized in that the annular part (10, 12, 13) forms the circular ring-shaped stop disk (10) and the axial extension (12) in one piece, the side of the stop disk (10) facing away from the clutch is supported directly on the metallic raceway part (9) and the end (13) of the axial extension (12) engaging behind the raceway part (9) is subdivided into resilient tabs by a number of slots (14).

2. Inner race ring according to claim 1, characterized in that the annular part (10, 12, 13) is made of polymeric material.

3. Inner race ring according to claim 1 or 2, characterized in that several stiffening ribs (15), distributed over the periphery, are arranged between the circular ring-shaped stop disk (10) and the axial extension (12).

4. Inner race ring according to claim 3, characterized in that the stiffening ribs (16) are made curved after the fashion of fan blades.

5. Inner race ring according to one of the preceding claims, characterized in that at the end of the inner race ring facing away from the clutch, the sliding sleeve (3) comprises openings or bores (17).

6. Inner race ring according to one of the preceding claims, characterized in that the stop disk (10), at its front surface facing the disk spring (2), comprises at least one radially extending rib (18) which locks between two neighbouring spring tongue ends (11) of the disk spring (2).

**Revendications**

1. Bague interne de roulement (6) d'une butée de débrayage (1) pour un embrayage à ressorts Belleville (2) pour véhicule automobile dans lequel la butée de débrayage (1) comprend un roulement (4) qui est agencé sur un manchon coulissant (3) et comporte deux bagues de roulement concentriques (5, 6) entre lesquelles roulent des éléments de roulement (8), et la bague interne de roulement (6) est constituée d'une pièce métallique formant chemin de roulement (9) et d'une pièce annulaire (10, 12, 13) qui, à son côté frontal faisant face à l'embrayage, comprend une plaque d'arrêt en forme d'anneau circulaire (10) qui coopère en fonctionnement avec les extrémités des languettes (11) du ressort Belleville (2) et qui (10, 12, 13) comporte un prolongement axial (12) inséré sans jeu dans l'alésage de la pièce métallique formant chemin de roulement (9), lequel prolongement axial (12), s'engage, à son extrémité (13) opposée à la plaque d'arrêt (10), de façon telle derrière l'extrémité de la pièce métallique formant chemin de roulement (9) que cette dernière (9) est retenue sur la pièce annulaire par concordance de forme, caractérisée en ce que la pièce annulaire (10, 12, 13) constitue, en une seule pièce, la plaque d'arrêt en forme d'anneau circulaire (10) et le prolongement axial (12), que la plaque d'arrêt (10) est supportée par son côté opposé à l'embrayage directement sur la pièce métallique formant chemin de roulement (9) et que l'extrémité (13) du prolongement axial (12) qui s'engage derrière la pièce formant chemin de roulement (9) est subdivisée en pattes élastiques par un nombre de fentes (14).

2. Bague interne de roulement selon la revendication 1, caractérisée en ce que la pièce annulaire (10, 12, 13) est réalisée en matière polymère.

3. Bague interne de roulement selon la revendication 1 ou 2, caractérisée en ce que plusieurs nervures de raidissement (15) réparties sur la périphérie sont agencées entre la plaque d'arrêt en forme d'anneau circulaire (10) et le prolongement axial (12).

4. Bague interne de roulement selon la revendication 3, caractérisée en ce que les nervures de raidissement (16) sont incurvées à la manière d'ailettes de ventilateur.

5. Bague interne de roulement selon une des revendications précédentes, caractérisée en ce que le manchon coulissant (3) comprend, à l'extrémité de la bague interne opposée à l'embrayage, des ouvertures ou des alésages (17).

6. Bague interne de roulement selon une des revendications précédentes, caractérisée en ce que la plaque d'arrêt (10) comprend, à sa surface frontale faisant face au ressort Belleville (2), au moins une nervure (18) qui s'étend radialement et s'engage par concordance de forme entre les extrémités (11) de deux languettes voisines du ressort Belleville (2).

Fig. 1

Fig. 2